# EUROPÄISCHE PATENTSCHRIFT

(11) **EP 3 321 131 B1**
(45) Veröffentlichungstag und Bekanntmachung des Hinweises auf die Patenterteilung: **31.08.2022**
(21) Anmeldenummer: 17199633.3
(22) Anmeldetag: 02.11.2017
(51) Int. Cl.: B60R 1/00, B62D 35/00, B60J 1/20

(54) **FAHRERHAUS EINES NUTZFAHRZEUGS MIT KAMERA-ABGEDECKTEN SICHTBEREICHEN**
DRIVER'S CAB OF A COMMERCIAL VEHICLE WITH CAMERA-COVERED VIEW AREAS
CABINE D'UN VÉHICULE UTILITAIRE POURVUE DE ZONES DE VISIBILITÉ COUVERTES PAR CAMÉRA

(30) Priorität: 09.11.2016 DE 102016013350
(43) Veröffentlichungstag der Anmeldung: 16.05.2018
(73) Patentinhaber: MAN Truck & Bus SE, 80995 München (DE)
(72) Erfinder: Zaindl, Albert, 85302 Gerolsbach (DE); Kopp, Stephan, 83623 Ascholding (DE)
(74) Vertreter: v. Bezold & Partner Patentanwälte - PartG mbB

(56) Entgegenhaltungen:
- DE-A1-102012 014 448
- JP-U- S5 731 283
- US-A- 5 251 953
- US-A1- 2011 018 699
- US-A1- 2012 062 741
- US-A1- 2016 052 566

## Beschreibung

Die vorliegende Erfindung betrifft ein Fahrerhaus eines Nutzfahrzeugs. Insbesondere ist ein Fahrerhaus zur wahlweisen Bestückung mit Kamerasystemen oder Spiegelsystemen zur Abdeckung von Sichtbereichen außerhalb des Nutzfahrzeugs beschrieben.

Zur Abdeckung einer Vielzahl, insbesondere gesetzlich vorgeschriebener Sichtbereiche, sind herkömmlicherweise Spiegelsysteme an der Außenhaut des Fahrerhauses eines Nutzfahrzeugs befestigt. Um die Wiedergabe der Sichtbereiche (beispielsweise verzerrungsfrei) zu verbessern, um Kamera-basierte Fahrerassistenzsysteme zu integrieren und/oder zur Verbesserung der Aerodynamik des Nutzfahrzeugs werden die herkömmlichen Spiegelsysteme zunehmend durch Kamerasysteme ersetzt. Die großflächigen Spiegel, welche in der Regel an der Fahrzeugtür befestigt sind, werden durch Kameras ersetzt. Diese Kameras werden in der Regel nicht an der Tür montiert, sondern im Bereich des Dachs des Nutzfahrzeugs. Folglich werden herkömmlicherweise die Spiegelmontagepunkte verblendet oder abgedeckt. Beispielhaft sei in diesem Zusammenhang auf die US 2012/0062741 A1, die US 2011/0018699 A1 und die DE 10 2012 014 448 A1 verwiesen, die allesamt derartige an Nutzfahrzeugen angeordnete Kamerasysteme offenbarten.

Jedoch ist der Luftwiderstand eines Nutzfahrzeugs von dessen globaler Umströmung abhängig und nicht eine lineare Summe aus Formwiderstand (aufgrund eines Grundkörpers des Nutzfahrzeugs) und induziertem Widerstand (aufgrund der Umströmung von Anbauteilen unter Aufbau eines Randwirbelsystems). Vielmehr besteht eine Interferenz zwischen der Umströmung des Grundkörpers und der Anbauteile, wodurch der Luftwiderstand des gesamten Nutzfahrzeugs gegenüber dem Luftwiderstand des Grundkörpers sowohl vergrößert als auch reduziert werden kann. Deshalb verursacht bei einem für Spiegelsysteme optimierten Grundkörper des Fahrerhauses der Entfall des Spiegelsystems eine aerodynamische Verschlechterung durch Vergrößerung des Randwirbelsystems.

Um prinzipiell den Luftwiderstand eines Nutzfahrzeugs zu verbessern, ist es im Stand der Technik bekannt, verschiedene Luftleitelemente an der Fahrzeugaußenfläche anzubringen. Beispielhaft sei hier auf die US 2016/0052566 A1, die JP S57 31283 U sowie die US 5,251,953 verwiesen. Alle diese Systeme sind jedoch auf einen Fahrerhauskörper ausgelegt, an dem die üblichen Spiegelsysteme angeordnet sind.

Somit ist es eine Aufgabe der vorliegenden Erfindung, ein Fahrerhaus eines Nutzfahrzeugs anzugeben, bei dem der Entfall einzelner oder aller Außenspiegel zu einer aerodynamischen Verbesserung führt. Eine alternative oder ergänzende Aufgabe ist ein Fahrerhaus bereitzustellen, bei dem der Fahrzeuginnenraum nicht durch eine aerodynamische Optimierung für Außenkameras verkleinert wird. Alternativ oder ergänzend ist ein Fahrerhaus eines Nutzfahrzeugs anzugeben, bei dem wahlweise Außenkameras oder Außenspiegel befestigbar sind.

Die Aufgabe oder Aufgaben werden durch ein Fahrerhaus eines Nutzfahrzeugs mit den Merkmalen des Anspruchs 1 gelöst. Vorteilhafte Ausführungsformen sind Gegenstand der abhängigen Patentansprüche.

Gemäß einem Aspekt ist ein Fahrerhaus eines Nutzfahrzeugs bereitgestellt. Das Fahrerhaus umfasst eine Anzeige im Fahrerhaus, die mit mindestens einer Kamera zur Wiedergabe eines Außenbereichs des Nutzfahrzeugs in Signalverbindung steht; und mindestens ein Luftleitelement, das außerhalb am Fahrerhaus auf einer mit einer Windschutzscheibe überlappenden Höhe angeordnet ist.

Das Luftleitelement kann dazu ausgebildet sein, die Luftströmung des Fahrtwinds wirbelfrei an einer Seite des Fahrerhauses vorbeizuleiten.

Das Fahrerhaus kann zur wahlweisen Bestückung mit entweder mindestens einem Außenspiegel oder dem mindestens einen Luftleitelement ausgelegt sein. Durch den Einsatz des mindestens einen Luftleitelements anstelle eines Außenspiegels kann dieselbe Außenhaut des Fahrerhauses wahlweise mit der mindestens einen Kamera und/oder mit mindestens einem Außenspiegel bestückt werden. Insbesondere ist ein variabler Grad einer Bestückung mit Kameras und/oder Außenspiegeln innerhalb einer Serienfertigung ermöglicht.

Die aerodynamische Auslegung der Außenhaut des Fahrerhauses kann für die Bestückung mit Außenspiegeln optimiert sein. Alternativ oder ergänzend kann die Außenhaut des Fahrerhauses für einen großen Bauraum und/oder Innenraum bei gegebener Länge (in Fahrtrichtung) des Fahrerhauses optimiert sein. Zumindest in Ausführungsbeispielen können beide Optimierungen durch Krümmungsradien an den Kanten der Außenhaut des Fahrerhauses (betrachtet in einer horizontalen Schnittebene) erreicht werden, die kleiner sind als bei einer aerodynamische Auslegung der Außenhaut des Fahrerhauses, die für Kameras ohne Außenspiegel und ohne ein erfindungsgemäßes Luftleitelement optimiert sind.

Die Anordnung des Luftleitelements auf einer mit der Windschutzscheibe überlappenden "Höhe" bedeutet, dass das Luftleitelement hinsichtlich seiner Höhe am Fahrerhaus und/oder seiner vertikaler Ausdehnung mit der Höhe der Windschutzscheibe überlappen kann. Dabei kann das Luftleitelement mit der Windschutzscheibe überlappen und/oder seitlich am Fahrerhaus (beispielsweise ohne Überlapp mit der Windschutzscheibe) angeordnet sein.

Die mindestens eine Kamera kann zur Fahrbahn und/oder entgegen der Fahrtrichtung gerichtet sein. Die mindestens eine Kamera kann einen Hauptaußenspiegel (beispielsweise für die Sichtfeldklasse II), einen Weitwinkelspiegel (beispielsweise für die Sichtfeldklasse IV), einen Frontspiegel (beispielsweise für die Sichtfeldklasse VI) und/oder einen Anfahrspiegel (auch Rampenspiegel, beispielsweise für die Sichtfeldklasse II) ersetzen. Sichtbereiche (auch: Sichtfelder) der jeweiligen Sichtfeldklasse (auch: Spiegelgruppe) sind in der EU-Richtlinie 2003/97/EG oder 2005/27/EG bestimmt.

Das Nutzfahrzeug kann ein Lastkraftwagen, eine Zugmaschine oder ein Bus sein. Das Nutzfahrzeug kann ein Frontlenker sein.

Erfindungsgemäß umfasst das Fahrerhaus eine oder mehrere Befestigungsstellen, die zur Befestigung mindestens eines Außenspiegels geeignet ist. Die Befestigungsstelle kann seitlich am Fahrerhaus, an einer Fahrzeugtür des Fahrerhauses, an einem Übergang von einer Fahrzeugfront zu einer Fahrzeugseite oder an einer A-Säule des Fahrerhauses angeordnet sein. An mindestens einer der Befestigungsstellen des Fahrerhauses ist das mindestens eine Luftleitelement befestigt.

Das Luftleitelement kann an einer Befestigungsstelle befestigt sein, die zur Befestigung eines Außenspiegels für den von der Kamera erfassten Außenbereich geeignet ist.

Das Luftleitelement kann mit der Windschutzscheibe und/oder einer Seitenscheibe überlappen. Zumindest in einem mit der Windschutzscheibe oder der Seitenscheibe überlappenden Bereich kann das Luftleitelement transparent sein. Beispielsweise ist das Luftleitelement transparent in einem Bereich, der vom Innenbereich des Fahrerhauses und/oder vom Fahrerplatz aus gesehen mit der Windschutzscheibe oder der Seitenscheibe überlappt.

Das mindestens eine Luftleitelement kann als eine Luftleitdüse ausgebildet sein. Die Luftleitdüse kann eine von der Außenhaut des Fahrerhauses beabstandeten Luftleitfläche und/oder einen an der Befestigungsstelle befestigten Fuß umfassen. Das Luftleitelement kann dazu ausgebildet sein, Luft zwischen der Außenhaut und der Luftleitfläche am Fahrerhaus vorbeizuleiten, beispielsweise an Stellen erhöhter Krümmung der Außenhaut.

Eine Länge des Fußes kann den Abstand zwischen der Luftleitfläche und der Außenhaut definieren. Der Fuß kann senkrecht auf die Luftleitfläche stehen. Der Fuß kann blickdicht sein. Die Luftleitfläche kann transparent sein.

Ein horizontaler Krümmungsradius der Luftleitfläche, d. h. ein Krümmungsradius in einer horizontalen (z. B. zur Fahrbahn parallelen) Schnittebene, kann größer sein als ein horizontaler Krümmungsradius der von der Luftleitfläche überdeckten Außenhaut. Durch die Luftleitfläche kann deren Krümmungsradius maßgeblich für eine stabile Umströmung (ohne Ablösung des Luftstroms von der Außenhaut) sein. Beispielsweise kann der kleinere Krümmungsradius der Außenhaut an sich einer Wirbelbildung entsprechen, die aufgrund des maßgeblichen, größeren Krümmungsradius der Luftleitfläche verhindert wird. Der horizontale Krümmungsradius der Luftleitfläche kann mindestens 150 mm betragen. Alternativ oder in Kombination kann der horizontale Krümmungsradius der überdeckten Außenhaut (beispielsweise an der A-Säule des Fahrerhauses) mindestens 75 mm betragen.

Mindestens ein Luftleitelement kann an der Fahrerseite des Fahrerhauses angeordnet sein. Alternativ oder ergänzend kann mindestens ein Luftleitelement an der Beifahrerseite des Fahrerhauses angeordnet sein. Mehrerer Luftleitelemente können asymmetrischen am Fahrerhaus befestigt sein.

Mindestens ein Luftleitelement kann (beispielsweise mit mindestens einer Befestigungsstelle) an der A-Säule oder jeweils an den A-Säulen des Fahrerhauses befestigt sein. Beispielsweise kann ein Luftleitelement an zwei oder mehr Befestigungsstellen befestigt sein. Die zwei oder mehr Befestigungsstellen eines Luftleitelements können an der A-Säule angeordnet sein. Alternativ (oder ergänzend bei mehreren Luftleitelementen) kann eine der zwei Befestigungsstellen an der A-Säule angeordnet sein, und eine andere Befestigungsstelle am Fahrzeugdach angeordnet sein.

Das Luftleitelement kann eine durchgehende Luftleitfläche von unterhalb der Unterkante der Windschutzscheibe (beispielsweise auf Höhe eines Frontkühlers) bis zu einer Höhe oberhalb der Unterkante der Windschutzscheibe umfassen.

Mindestens ein Luftleitelement kann an einer Fahrzeugtür des Fahrerhauses befestigt sein. Die Fahrzeugtür kann mindestens eine Befestigungsstelle umfassen. Die Befestigungsstelle kann für eine Schraubverbindung eines Außenspiegels geeignet sein. An der Befestigungsstelle kann (beispielsweise anstelle des Außenspiegels) das Luftleitelement angeschraubt sein.

Alternativ oder ergänzend kann mindestens ein Luftleitelement an einer Verkleidung eines Scharniers der Fahrzeugtür befestigt sein. Das Scharnier kann die Fahrzeugtür mit der A-Säule schwenkbar verbinden. Beispielsweise kann das Luftleitelement an der feststehenden Verkleidung des Scharniers auf der Seite der A-Säule befestigt sein.

Mindestens ein Luftleitelement (beispielsweise dessen Luftleitfläche) kann auf einer Höhe angeordnet sein, die höher als eine Unterkante der Windschutzscheibe ist. Mindestens ein Luftleitelement (beispielsweise dessen Luftleitfläche) kann mit einer Oberkante der Windschutzscheibe und/oder einer Oberkante eines Seitenfensters überlappend angeordnet sein. Dadurch kann eine Verwirbelung auf der Höhe eines gegebenenfalls geöffneten Seitenfensters vermieden werden.

Das Fahrerhaus kann die Windschutzscheibe und ein oberhalb der Windschutzscheibe angeordnetes Fahrzeugdach umfassen.

Die mindestens eine Kamera kann außerhalb des Fahrerhauses befestigt sein. Die mindestens eine Kamera kann seitlich am Fahrerhaus befestigt sein. Die mindestens eine Kamera kann am Fahrzeugdach befestigt sein. Die Anzeige im Fahrerhaus kann zur Wiedergabe eines Bilds der mindestens einen Kamera ausgebildet sein.

Gemäß einem weiteren Aspekt ist ein Nutzfahrzeug, insbesondere eine Sattelzugmaschine, mit einem Fahrerhaus gemäß dem vorstehenden Aspekt bereitgestellt.

Weitere Merkmale und Vorteile der Erfindung werden im Folgenden unter Bezugnahme auf die beigefügten Zeichnungen beschrieben. Es zeigen:
- Figur 1: eine schematische Aufsicht eines Nutzfahrzeugs, dessen Fahrerhaus ausschließlich mit Außenspiegeln bestückt ist;
- Figur 2: eine schematische Aufsicht des Nutzfahrzeugs aus Figur 1 bei Entfall der Außenspiegel am Fahrerhaus;
- Figur 3: eine schematische Aufsicht eines Nutzfahrzeugs, dessen Fahrerhausaerodynamik nur für den Einsatz ohne Außenspiegel optimiert ist;
- Figur 4: eine schematische Aufsicht eines Nutzfahrzeugs mit einem Ausführungsbeispiel eines Fahrerhauses; und
- Figur 5: eine schematische perspektivische Darstellung eines Nutzfahrzeugs mit einem Ausführungsbeispiel eines Fahrerhauses.

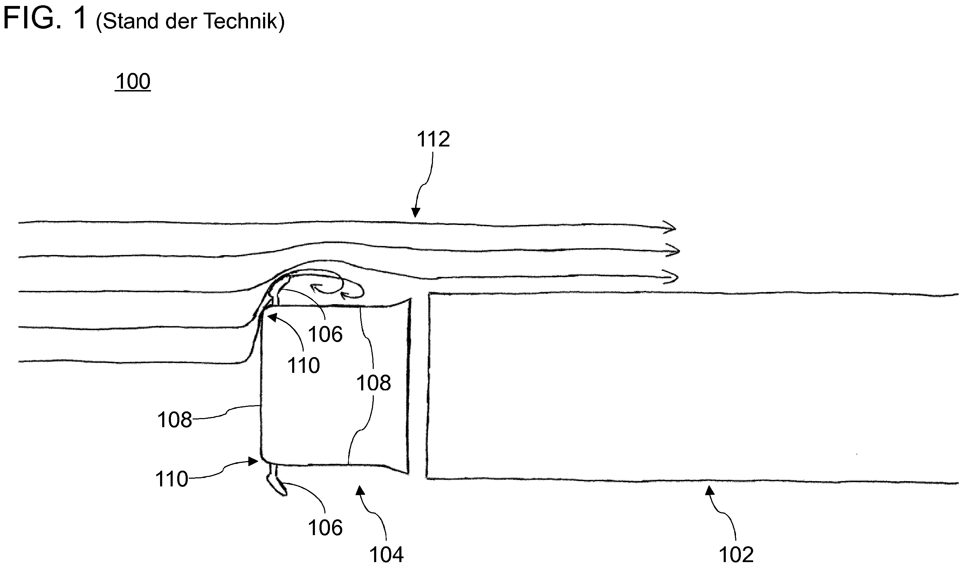

Figur 1 zeigt in einer schematischen Aufsicht die Umströmung eines allgemein mit Bezugszeichen 100 bezeichneten Nutzfahrzeugs. Als Beispiel eines Nutzfahrzeug 100 wird im Folgenden, ohne darauf beschränkt zu sein, ein Sattelzug mit einem Aufleger 102 und einem Fahrerhaus 104 (auch als Fahrerkabine oder Kabine bezeichnet) beschrieben.

Das in Figur 1 gezeigte Fahrerhaus 104 ist mit Außenspiegeln 106 bestückt. Die Außenhaut 108 des Fahrerhauses 104 ist, insbesondere im Bereich der A-Säulen 110, für die Bestückung mit den Außenspiegeln 106 ausgelegt.

In der horizontalen Bildebene der Figur 1 sind die Krümmungsradien der Außenhaut 108, insbesondere im Bereich der A-Säulen 110, in Abhängigkeit von Form, Größe und Position der Außenspiegel 106 zur Minimierung des Luftwiderstands optimiert. Die Größe des von der Außenhaut umschlossenen Raums ist (beispielsweise bei gegebener Länge des Fahrerhauses 104) eine Nebenbedingung der Optimierung.

Die allgemein mit Bezugszeichen 112 bezeichnete und qualitative dargestellte Luftströmung um das Nutzfahrzeug 100 weist ein Wirbelgebiet im Bereich der A-Säule 110 seitlich des Fahrerhauses 104 auf. Aufgrund gesetzlich vorgeschriebenen Größen der Außenspiegel 106 ist eine Ablösung der Luftströmung 112 von der Außenhaut 108 hinter den Außenspiegeln 106 unvermeidlich. Für die Minimierung des Luftwiderstands stehen die Außenhaut 108 und die Außenspiegel 106 in Wechselwirkung, in dem Sinn, dass ein Anstieg des Luftwiderstands durch Verkleinerung der Krümmungsradien der Außenhaut bei Anwesenheit der Außenspiegel geringer ist als wenn dieselbe Verkleinerung der Krümmungsradien vorgenommen werden würden bei einer Außenhaut 108, die ohne Außenspiegel 106 umströmt würde. Deshalb führt die Optimierung unter der Raumgrößennebenbedingung zu den in Figur 1 schematisch gargestellten relativ kleinen Krümmungsradien im Bereich der A-Säule 110.

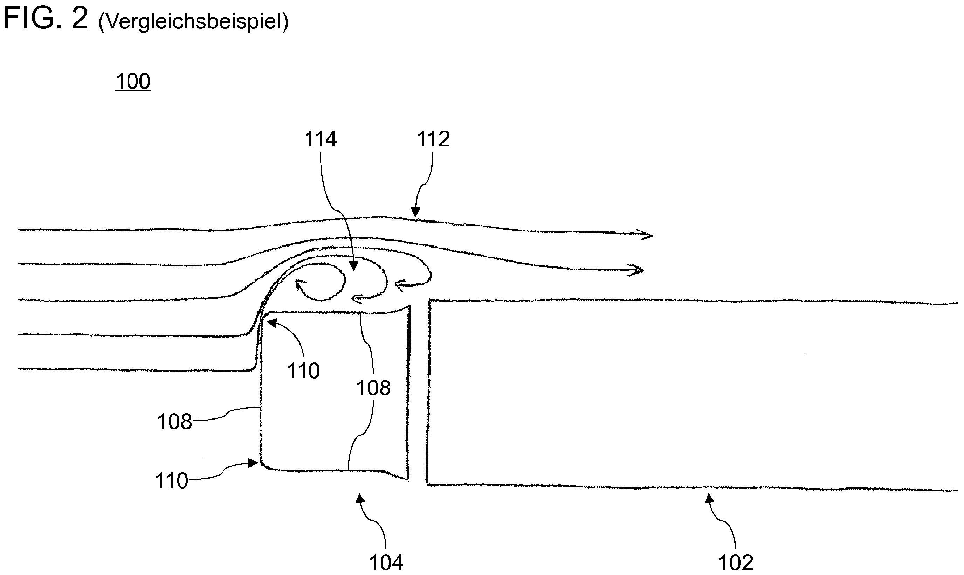

Figur 2 zeigt in einer schematischen Aufsicht ein erstes Vergleichsbeispiel eines Nutzfahrzeugs 100. Merkmale, die denen des in der Figur 1 gezeigten Nutzfahrzeugs 100 entsprechen, sind mit gleichen Bezugszeichen versehen.

Bei der aerodynamischen Auslegung kann das Nutzfahrzeug 100, insbesondere dessen Fahrerhaus 104, entweder mit oder ohne Außenspiegel 106 optimiert werden. Bei einer Optimierung auf ein Außenspiegelsystem, wie schematisch in den Figuren 1 und 2 gezeigt, kommt es bei dem in Figur 2 gezeigten Entfall des Außenspiegelsystems zu einer aerodynamischen Verschlechterung durch vergrößerte Wirbelgebiete 114 im Bereich der A-Säule 110.

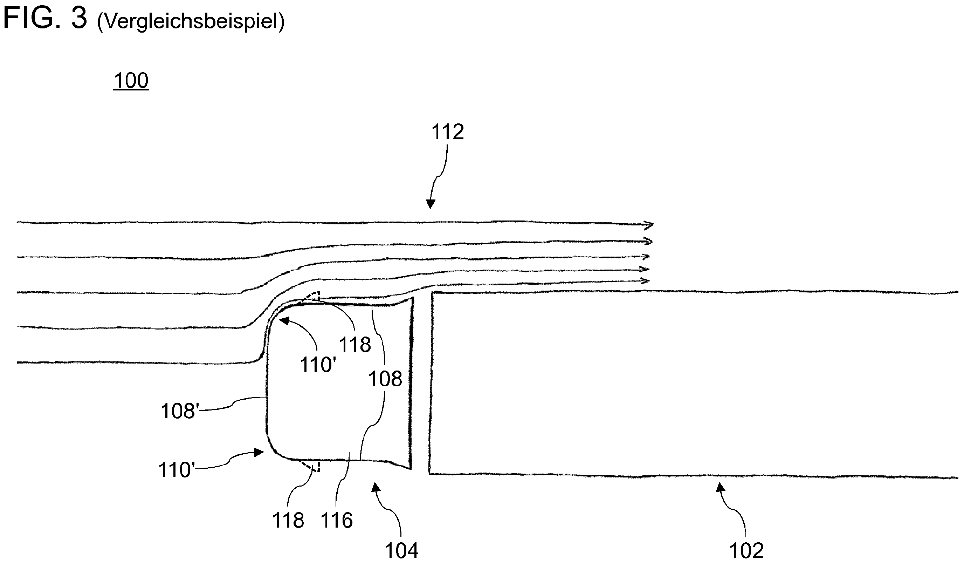

Figur 3 zeigt in einer schematischen Aufsicht ein zweites Vergleichsbeispiel eines Nutzfahrzeugs 100. Entsprechende Merkmale, die gegenüber den Nutzfahrzeugen der Figuren 1 und 2 abgewandelt sind, tragen einen Apostroph (') im Bezugszeichen.

Bei dem in Figur 3 gezeigten zweiten Vergleichsbeispiel ist die Außenhaut 108' des Fahrerhauses 104, insbesondere im Bereich der A-Säule 110', optimiert auf am Fahrzeugdach 116 des Fahrerhauses 104 befestigte Kameras 118 eines Kamera-Anzeige-Systems, das die Außenspiegel 106 (teilweise oder im Fall der Figur 3 vollständig) ersetzt.

Beispielsweise sind zur Minimierung des Luftwiderstands des Fahrerhauses 104 mit den Kameras 118 und ohne die Außenspiegel 106 die Fahrzeugkanten soweit abgerundet, dass wertvoller Bau- und Innenraum im Fahrerhaus 104 verloren geht. Die Raumgrößennebenbedingung wird nicht erfüllt.

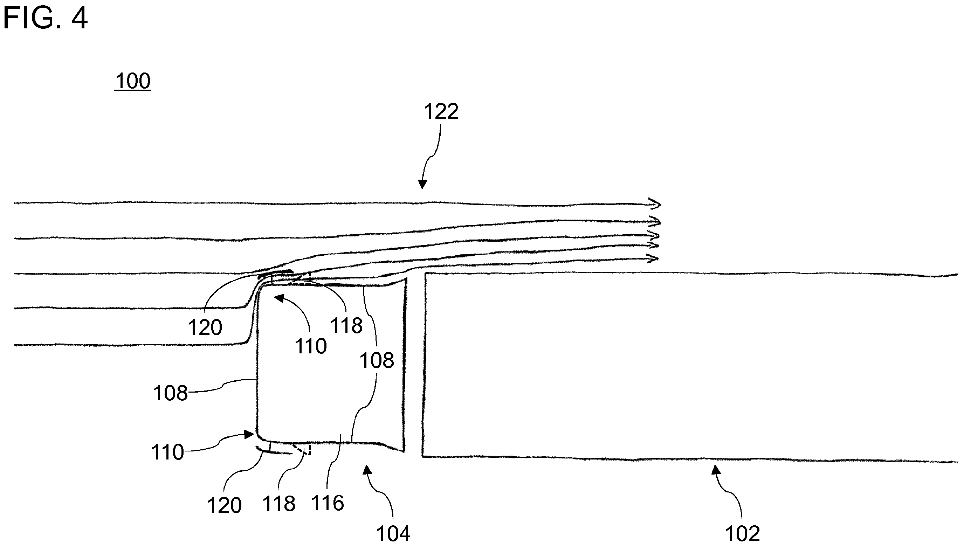

Figur 4 zeigt in einer Aufsicht ein Ausführungsbeispiel eines Fahrerhauses 104 für ein Nutzfahrzeug 100. Merkmale, die mit Merkmalen eines der Nutzfahrzeuge der Figuren 1 bis 3 übereinstimmen oder jenen funktional entsprechen, sind mit gleichen Bezugszeichen versehen.

Das Fahrerhaus 104 umfasst ein oberhalb der Windschutzscheibe angeordnetes Fahrzeugdach 116 mit mindestens einer am Fahrzeugdach 116 außerhalb des Fahrerhauses 104 befestigten Kamera 118.

Mindestens eine Anzeige, beispielsweise im Kombinationsinstrument und/oder in der Mittelkonsole, ist innerhalb des Fahrerhauses 104 zur Wiedergabe eines oder mehrerer Bilder der mindestens einen Kamera 118 vorgesehen.

Eine Außenhaut 108 des Fahrerhauses 104 ist, insbesondere im Bereich einer A-Säule 110, aerodynamisch auf ein System von Außenspiegeln (beispielsweise die Außenspiegel 106) und/oder die Größe des Fahrzeuginnenraums optimiert. Beispielsweise kann die Außenhaut 108 mit jener der Figuren 1 und 2 übereinstimmen.

An jenen Stellen der Außenhaut 108, an denen ein Außenspiegel aufgrund des Einsatzes der mindestens einen Kamera 118 entfallen ist (beispielsweise auf der linken und/oder der rechten Seite des Fahrerhauses 104), ist ein Luftleitelement 120 angeordnet. Das Luftleitelement 120 ist vorzugsweise tiefer als die mindestens eine Kamera 118 (beispielsweise unterhalb der den entsprechenden Außenspiegel ersetzenden Kamera 118) angeordnet.

Alternativ oder ergänzend ist das Luftleitelement 120 außerhalb am Fahrerhaus 104 auf einer mit der Windschutzscheibe des Fahrerhauses 104 überlappenden Höhe angeordnet. Beispielsweise ist mindestens ein Luftleitelement 120 an einer Tür des Fahrerhauses 104, an der A-Säule 110 des Fahrerhauses 104 und/oder an einer Verkleidung eines Scharniers der Fahrzeugtür befestigt.

Jedes Luftleitelement 120 ist an der Außenhaut 108 an mindestens einer Befestigungsstelle mit der Außenhaut 108 mechanisch verbunden, beispielsweise angeschraubt. Einzelne oder alle Befestigungsstellen des Luftleitelements 120 können mit Befestigungsstellen übereinstimmen, die zur Befestigung herkömmlicher Außenspiegel 106 geeignet sind. Ferner können einzelne Befestigungsstellen oder zusätzliche Befestigungsstellen der Luftleitelemente 120 ausschließlich für die Luftleitelemente 120 vorgesehen sein.

Die Außenhaut 108, insbesondere deren Krümmung im Bereich der A-Säule 110, kann zum Vorteil eines größeren Innenraums im Fahrerhaus 104 (beispielsweise für den Bauraum von Aggregaten oder zur Nutzung durch einen Fahrer) optimiert sein. Alternativ oder ergänzend kann die Geometrie der Außenhaut 108 des Fahrerhauses 104 mit der Geometrie übereinstimmen, die für Außenspiegel 106 optimiert ist. Dadurch kann dieselbe Geometrie des Fahrerhauses 104 für eine vollständige Bestückung mit Außenspiegeln 106, für eine gemischte Bestückung mit mindestens einem Außenspiegel und mit mindestens einer Kamera 118, und/oder für eine ausschließliche Bestückung mit Kameras 118 (ohne Außenspiegel 106) verwendet werden.

Die Luftleitelemente 120 sind in einer Ausgestaltung des Fahrerhauses 104 blickdicht oder zumindest teilweise transparent. Beispielsweise umfasst das Luftleitelement 120 eine Luftleitfläche, die (zumindest teilweise) transparent ist. Die transparente Luftleitfläche oder weitere Teile des Luftleitelements 120 (beispielsweise zur Befestigung an der Außenhaut 108) können aus Plexiglas gefertigt sein.

Beispielsweise überlappt das an der A-Säule 110 angeordnete Luftleitelement 120 mit der Windschutzscheibe und/oder einem Seitenfenster (beispielsweise in der Fahrzeugtür). Das Luftleitelement 120 ist, zumindest soweit es mit einer Sichtscheibe überlappt, transparent ausgeführt. Durch die transparente Ausführung verdeckt das Luftleitelement 120 keine direkte Sicht aus dem Fahrerhaus 104.

Das Luftleitelement 120 ist aerodynamisch ausgelegt zur Leitung eines Luftstroms 122 entlang der Außenhaut 108 des Fahrerhauses 104, insbesondere im Bereich der A-Säule 110 des Fahrerhauses 104. Alternativ oder ergänzend ist das Luftleitelement 120 dazu ausgebildet, mindestens eine der folgenden Störgrößen zu vermeiden oder zu reduzieren: Luftstromwirbelbildungen (insbesondere im Wirbelbereich 114 der Figur 2), Windgeräusche und/oder Verschmutzungen. Beispielsweise kann der durch das Luftleitelement 120 an einer seitlichen Sichtscheibe tangential geführte Luftstrom 122 eine Regenwasser und Schmutzwasser abweisende Grenzschicht bilden.

Optional erstreckt sich mindestens eines der Luftleitelemente 120 entlang der A-Säule 110 bis zu einer Höhe, die einer Oberkante eines Seitenfensters (beispielsweise in der Fahrzeugtür) entspricht. Durch die Vermeidung des Wirbelbereichs 114 an Seitenfenstern des Fahrerhauses 104 ist ein konstruktiver Regenschutz bei während der Fahrt (zumindest spaltweise) geöffneten Seitenfenstern gegeben.

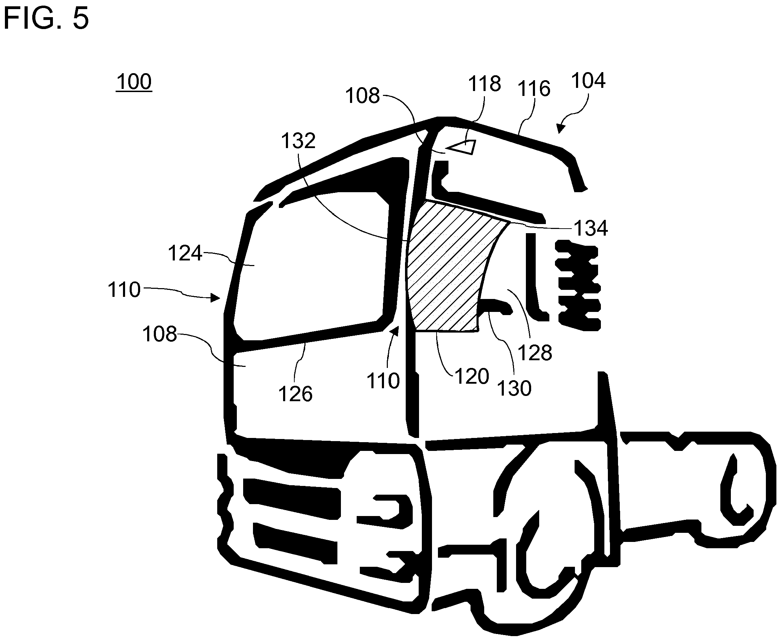

Figur 5 zeigt schematisch eine räumliche Darstellung eines Nutzfahrzeugs 100 mit einem Ausführungsbeispiel des Fahrerhauses 104. Das in Figur 5 dargestellte Ausführungsbeispiel kann in einzelnen oder allen Merkmalen eine Weiterbildung des in Figur 4 gezeigten Ausführungsbeispiels sein, wobei gleiche oder austauschbare Merkmale mit übereinstimmenden Bezugszeichen versehen sind.

Das Fahrerhaus 104 umfasst eine Windschutzscheibe 124. Beim in Figur 5 gezeigten Ausführungsbeispiel umfasst das Luftleitelement 120 eine umlaufend von der Fahrzeughaut 108 beabstandete Luftleitfläche. Beispielseise weist das obere Ende und das untere Ende des Luftleitelements 120 jeweils eine freistehende Kante auf. Alternativ kann das obere Ende und/oder das untere Ende des Luftleitelements 120 an der Außenhaut 108 anliegen oder glatt in die Außenhaut 108 übergehen.

Das untere Ende des Luftleitelements 120 ist auf der Höhe einer Unterkante 126 der Windschutzscheibe 124 oder höher als die Unterkante 126 angeordnet.

Das Luftleitelement 120 ist an Anschraubpunkten der Fahrzeugtüre befestigt. Die Anschraubpunkte sind zur Befestigung eines Außenspiegels (beispielsweise des Außenspiegels 106) geeignet, dessen Funktion durch die Kamera 118 oder eine andere Außenkamera ersetzt ist.

Das untere Ende des Luftleitelements 120 kann tiefer sein als eine Unterkante 130 eines Seitenfensters 128 (beispielsweise eines Fensters in der Fahrzeugtüre), und/oder das obere Ende des Luftleitelements 120 kann höher sein als eine Oberkante des Seitenfensters 128. Dadurch kann ein das Seitenfenster vor Verschmutzung schützender Luftstrom durch das Luftleitelement erzeugt werden.

Eine Vorderkante 132 des Luftleitelements 120 ist zur Fahrzeugmitte hin gekrümmt. Die Vorderkante 132 des Luftleitelements 120 kann in Fahrtrichtung über die A-Säule 110 des Fahrhauses 104 hinausragen.

In jedem Ausführungsbeispiel kann eine obere hintere Ecke 134 des Luftleitelements 120 einen spitzen Winkel einschließen. Die Ecke 134 kann einen Ablösepunkt der Luftströmung 122 vom Luftleitelement 120 bestimmen. Dadurch kann ein Hin- und Herwandern des Ablösepunkts, eine instabile Strömung 122 und/oder ein Flattern des Luftleitelements 120 vermieden werden.

Aus vorstehenden Ausführungsbeispielen ist eine Vielzahl an Vorteilen der vorliegenden Erfindung ersichtlich. Insbesondere können zumindest bei einzelnen Ausführungsbeispielen durch die Kombination von Kameras, die herkömmliche Außenspiegel ersetzen, und mindestens einem Luftleitelement, das vorzugsweise an der Stelle eines ersetzten Außenspiegels angeordnet ist, der Luftwiderstand des Nutzfahrzeugs und damit der Kraftstoffverbrauch verringert werden, beispielsweise ohne die Krümmungsradien der Außenhaut des Nutzfahrzeugs zu vergrößern und dadurch den von der Außenhaut umschlossenen Raum zu verkleinern.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Nutzfahrzeug
- 102: Sattelauflieger
- 104: Fahrerhaus
- 106: Außenspiegel
- 108, 108': Außenhaut
- 110,110': A-Säule
- 112: Luftströmung
- 114: Wirbelgebiet
- 116: Fahrzeugdach
- 118: Kamera
- 120: Luftleitelement
- 122: Geleiteter Luftstrom
- 124: Windschutzscheibe
- 126: Unterkante der Windschutzscheibe
- 128: Seitenfenster
- 130: Unterkante der Seitenscheibe
- 132: Vorderkante des Luftleitelements
- 134: Obere hintere Ecke des Luftleitelements

## Patentansprüche

1. Fahrerhaus (104) eines Nutzfahrzeugs (100), umfassend:
eine Anzeige im Fahrerhaus (104), die mit mindestens einer Kamera (118) zur Wiedergabe eines Außenbereichs des Nutzfahrzeugs in Signalverbindung steht, wobei die mindestens eine Kamera die Funktion eines Außenspiegels des Nutzfahrzeugs ersetzt; **gekennzeichnet durch**
mindestens ein Luftleitelement (120), das anstelle des entsprechenden Außenspiegels außerhalb am Fahrerhaus (104) auf einer mit einer Windschutzscheibe (124) überlappenden Höhe angeordnet ist,
wobei das Fahrerhaus (104) mindestens eine Befestigungsstelle umfasst, die zur Befestigung eines Außenspiegels geeignet ist und an der das Luftleitelement (120) befestigt ist.

2. Fahrerhaus nach Anspruch 1, wobei das Luftleitelement (120) an einer Befestigungsstelle befestigt ist, die zur Befestigung eines Außenspiegels für den von der Kamera erfassten Außenbereich geeignet ist.

3. Fahrerhaus nach Anspruch 1 bis 2, wobei das Luftleitelement (120) zumindest in einem mit der Windschutzscheibe (124) oder einer Seitenscheibe (128) überlappenden Bereich transparent ist.

4. Fahrerhaus nach einem der Ansprüche 1 bis 3, wobei das mindestens eine Luftleitelement (120) eine Luftleitdüse mit einer von einer Außenhaut (108) des Fahrerhauses (104) beabstandeten Luftleitfläche umfasst.

5. Fahrerhaus nach Anspruch 4, wobei ein horizontaler Krümmungsradius der Luftleitfläche größer ist als ein horizontaler Krümmungsradius der von der Luftleitfläche überdeckten Außenhaut.

6. Fahrerhaus nach Anspruch 5, wobei der horizontale Krümmungsradius der Luftleitfläche mindestens 150 mm beträgt und/oder der horizontale Krümmungsradius der überdeckten Außenhaut mindestens 75 mm beträgt.

7. Fahrerhaus nach einem der Ansprüche 1 bis 6, wobei mindestens ein Luftleitelement (120) an einer A-Säule (110) des Fahrerhauses (104) befestigt ist.

8. Fahrerhaus nach einem der Ansprüche 1 bis 7, wobei mindestens ein Luftleitelement (120) an einer Fahrzeugtür des Fahrerhauses (104) befestigt ist.

9. Fahrerhaus nach einem der Ansprüche 1 bis 8, wobei die Fahrzeugtür mindestens eine Befestigungsstelle umfasst, die für eine Schraubverbindung eines Außenspiegels geeignet ist und an der das Luftleitelement (120) angeschraubt ist.

10. Fahrerhaus nach einem der Ansprüche 1 bis 9, wobei mindestens ein Luftleitelement (120) an einer Verkleidung eines Scharniers einer Fahrzeugtür befestigt ist.

11. Fahrerhaus nach einem der Ansprüche 1 bis 10, wobei mindestens ein Luftleitelement (120) auf einer Höhe angeordnet ist, die höher als eine Unterkante (126) der Windschutzscheibe (124) ist.

12. Fahrerhaus nach einem der Ansprüche 1 bis 11, wobei mindestens ein Luftleitelement (120) mit einer Oberkante der Windschutzscheibe (124) oder eines Seitenfensters (128) überlappenden angeordnet ist.

13. Fahrerhaus nach einem der Ansprüche 1 bis 12, wobei die mindestens eine Kamera (118) außerhalb des Fahrerhauses (104) seitlich an einem Fahrzeugdach (116) befestigt ist.

14. Nutzfahrzeug (100), insbesondere eine Sattelzugmaschine, umfassend ein Fahrerhaus (104) gemäß einem der Ansprüche 1 bis 13.

## Claims

1. Driver's cab (104) of a commercial vehicle (100), comprising:
a display in the driver's cab (104), which display is signal-connected to at least one camera (118) for displaying an external region of the commercial vehicle, the at least one camera replacing the function of an external mirror of the commercial vehicle; **characterized by**
at least one air guiding element (120) which is arranged, instead of the corresponding external mirror, on the outside of the driver's cab (104) at a height which overlaps with a windscreen (124),
the driver's cab (104) comprising at least one fastening point which is suitable for fastening an external mirror and to which the air guiding element (120) is fastened.

2. Driver's cab according to Claim 1, the air guiding element (120) being fastened to a fastening point which is suitable for fastening an external mirror for the external region which is captured by the camera.

3. Driver's cab according to Claims 1 and 2, the air guiding element (120) being transparent at least in a region which overlaps with the windscreen (124) or a side window (128).

4. Driver's cab according to one of Claims 1 to 3, the at least one air guiding element (120) comprising an air guiding nozzle with an air guiding surface which is spaced apart from an external skin (108) of the driver's cab (104).

5. Driver's cab according to Claim 4, a horizontal curvature radius of the air guiding surface being greater than a horizontal curvature radius of the external skin which is covered by the air guiding surface.

6. Driver's cab according to Claim 5, the horizontal curvature radius of the air guiding surface being at least 150 mm and/or the horizontal curvature radius of the covered external skin being at least 75 mm.

7. Driver's cab according to one of Claims 1 to 6, at least one air guiding element (120) being fastened to an A-pillar (110) of the driver's cab (104).

8. Driver's cab according to one of Claims 1 to 7, at least one air guiding element (120) being fastened to a vehicle door of the driver's cab (104).

9. Driver's cab according to one of Claims 1 to 8, the vehicle door comprising at least one fastening point which is suitable for a screw connection of an external mirror, and to which the air guiding element (120) is screwed.

10. Driver's cab according to one of Claims 1 to 9, at least one air guiding element (120) being fastened to a trim panel of a hinge of a vehicle door.

11. Driver's cab according to one of Claims 1 to 10, at least one air guiding element (120) being arranged at a height which is higher than a lower edge (126) of the windscreen (124).

12. Driver's cab according to one of Claims 1 to 11, at least one air guiding element (120) being arranged so as to overlap with an upper edge of the windscreen (124) or of a side window (128).

13. Driver's cab according to one of Claims 1 to 12, the at least one camera (118) being fastened laterally to a vehicle roof (116) outside the driver's cab (104).

14. Commercial vehicle (100), in particular a semitrailer tractor, comprising a driver's cab (104) according to one of Claims 1 to 13.

## Revendications

1. Cabine de conduite (104) d'un véhicule utilitaire (100), comprenant :
un affichage dans la cabine de conduite (104), qui est en liaison de signalisation avec au moins une caméra (118) pour reproduire une zone extérieure du véhicule utilitaire, l'au moins une caméra remplaçant la fonction d'un rétroviseur extérieur du véhicule utilitaire ; **caractérisée par**
au moins un élément de guidage d'air (120), qui est agencé à l'extérieur de la cabine de conduite (104) à la place du rétroviseur extérieur correspondant, à une hauteur chevauchant un pare-brise (124),
la cabine de conduite (104) comprenant au moins un emplacement de fixation qui est approprié pour la fixation d'un rétroviseur extérieur et auquel est fixé l'élément de guidage d'air (120).

2. Cabine de conduite selon la revendication 1, l'élément de guidage d'air (120) étant fixé à un emplacement de fixation qui est approprié pour la fixation d'un rétroviseur extérieur pour la zone extérieure couverte par la caméra.

3. Cabine de conduite selon les revendications 1 à 2, l'élément de guidage d'air (120) étant transparent au moins dans une zone chevauchant le pare-brise (124) ou une vitre latérale (128).

4. Cabine de conduite selon l'une quelconque des revendications 1 à 3, l'au moins un élément de guidage d'air (120) comprenant une buse de guidage d'air ayant une surface de guidage d'air espacée d'une peau extérieure (108) de la cabine de conduite (104).

5. Cabine de conduite selon la revendication 4, un rayon de courbure horizontal de la surface de guidage d'air étant supérieur à un rayon de courbure horizontal de la peau extérieure recouverte par la surface de guidage d'air.

6. Cabine de conduite selon la revendication 5, le rayon de courbure horizontal de la surface de guidage d'air étant d'au moins 150 mm et/ou le rayon de courbure horizontal de la peau extérieure recouverte étant d'au moins 75 mm.

7. Cabine de conduite selon l'une quelconque des revendications 1 à 6, au moins un élément de guidage d'air (120) étant fixé à un montant A (110) de la cabine de conduite (104).

8. Cabine de conduite selon l'une quelconque des revendications 1 à 7, au moins un élément de guidage d'air (120) étant fixé à une porte de véhicule de la cabine de conduite (104).

9. Cabine de conduite selon l'une quelconque des revendications 1 à 8, la porte de véhicule comprenant au moins un emplacement de fixation qui est approprié pour un assemblage par vis d'un rétroviseur extérieur et sur lequel est vissé l'élément de guidage d'air (120).

10. Cabine de conduite selon l'une quelconque des revendications 1 à 9, au moins un élément de guidage d'air (120) étant fixé à un habillage d'une charnière d'une porte de véhicule.

11. Cabine de conduite selon l'une quelconque des revendications 1 à 10, au moins un élément de guidage d'air (120) étant agencé à une hauteur qui est supérieure à un bord inférieur (126) du pare-brise (124).

12. Cabine de conduite selon l'une quelconque des revendications 1 à 11, au moins un élément de guidage d'air (120) étant agencé en chevauchement avec un bord supérieur du pare-brise (124) ou d'une fenêtre latérale (128) .

13. Cabine de conduite selon l'une quelconque des revendications 1 à 12, l'au moins une caméra (118) étant fixée latéralement à un toit de véhicule (116) à l'extérieur de la cabine de conduite (104).

14. Véhicule utilitaire (100), notamment tracteur de semi-remorque, comprenant une cabine de conduite (104) selon l'une quelconque des revendications 1 à 13.
